# EUROPEAN PATENT SPECIFICATION

(11) **EP 2 836 917 B1**
(45) Date of publication and mention of the grant of the patent: **15.08.2018**
(21) Application number: 12872557.9
(22) Date of filing: 30.03.2012
(51) Int. Cl.: G06F 15/173, H04W 8/04, H04W 28/02, H04L 12/825, H04W 76/18, H04L 29/14

(54) **METHOD AND APPARATUS FOR PERFORMING OVERLOAD CONTROL FOR HSS RECOVERY**
VERFAHREN UND VORRICHTUNG ZUR DURCHFÜHRUNG EINER ÜBERLASTSTEUERUNG ZUR HSS-WIEDERHERSTELLUNG
PROCÉDÉ ET APPAREIL SERVANT À EFFECTUER UNE COMMANDE DE SURCHARGE POUR UNE RÉCUPÉRATION HSS

(43) Date of publication of application: 18.02.2015
(73) Proprietor: Nokia Solutions and Networks Oy, 02610 Espoo (FI)
(72) Inventor: WONG, Curt, Sammamish, WA 98075 (US); CHANDRAMOULI, Devaki, Plano, TX 75054 (US)
(74) Representative: Borgström, Markus
(86) International application number: PCT/US2012/031472
(87) International publication number: WO 2013/147851

(56) References cited:
- EP-A1- 2 083 579
- US-A1- 2003 027 571
- US-A1- 2005 147 040
- US-A1- 2010 278 046
- US-A1- 2011 261 695
- US-A1- 2011 270 967
- US-A1- 2011 270 967
- US-A1- 2012 033 551
- HUAWEI ET AL: "HLR/HSS Overload Notification solution", 3GPP DRAFT; S2-112222_EMAIL_REV4_S2-112209_S2_84_HSS OVERLOAD NOTIFICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Bratislava, Slovakia; 20110411 - 20110415, 26 April 2011 (2011-04-26), XP050631692, [retrieved on 2011-04-26]

## Description

### BACKGROUND:

### Field:

Communication systems, such as the evolved packet system (EPS), can provide radio interface and packet core network functions for broadband wireless data access. The evolved packet system can include core network functions such as mobility management entity (MME), packet data network gateway (PDN-GW), and serving gateway (S-GW).

### Description of the Related Art:

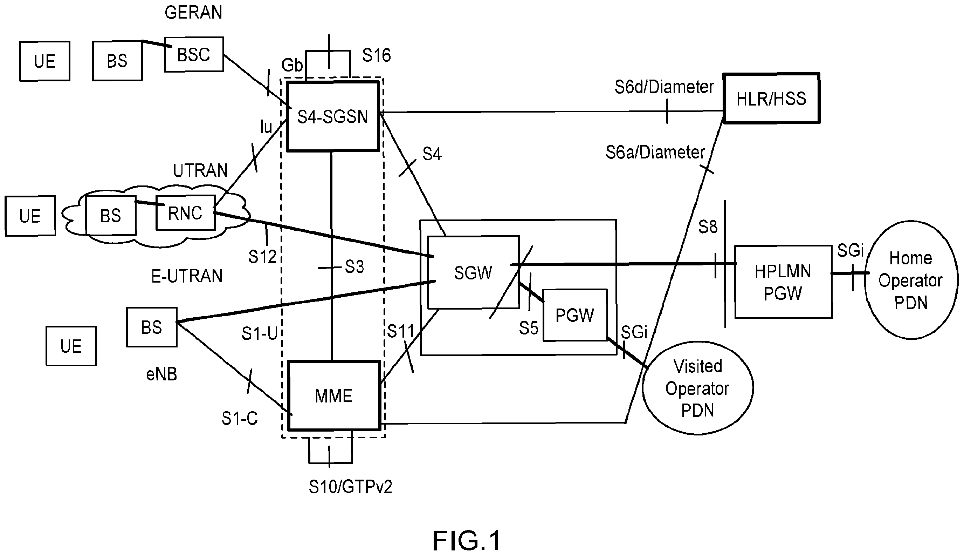

The evolved packet system (EPS), the successor of general packet radio system (GPRS), provides radio interfaces and packet core network functions for broadband wireless data access. EPS core network functions include the mobility management entity (MME), the packet data network gateway (PDN-GW) and the Serving Gateway (S-GW). An example of an evolved packet core architecture is illustrated in Figure 1 and is described by third generation partnership project (3GPP) technical specification (TS) 23.401, which is incorporated herein by reference in its entirety. A common packet domain core network can be used for both radio access networks (RANs), the global system for mobile communication (GSM) enhanced data rates for GSM evolution (EDGE) radio access network (GERAN) and the universal terrestrial radio access network (UTRAN).

Currently, second and third generation circuit switched (CS) infrastructure or support for an internet protocol (IP) multimedia subsystem (IMS) may be required to support voice and especially short message service (SMS) services in packet switched (PS), for example, circuit switched fallback (CSFB), single radio voice call continuity (SRVCC), and IMS based voice over IP (VoIP).

As mentioned above, the evolved packet system, as a successor of the general packet radio system, can provide new radio interface and new packet core network functions for broadband wireless data access. In such configurations, the home subscriber server (HSS) can have numerous interfaces with varying network entities, such as the evolved packet system (EPS), an internet protocol multimedia subsystem (IMS), policy charging control function (PCC), authentication, authorization, and accounting (AAA) function, etc. These interfaces allow an operator to provision services as appropriate to its subscribers. The HSS must be adequately protected from overloading due to all of these related interactions; if adequate overload protection is not implemented, the user will not receive any services during overload conditions.

Some of the issues noted in networks, as described, for example, in TR 23.843, includes a flood of registrations caused by special mobility events. In other words, masses of mobile users may attempt to simultaneously perform registration procedures such as Attach, or location updating. An example of such a scenario is one where a train or a bus is crossing a local area identification (LAI)/routing area identification (RAI) border, or when an airplane arrives at an airport. Additionally, there may be situations where there are scattered 3G/4G coverage areas, which result in frequent radio access technology reselection by user equipment such as, for example, smart phones. Additionally, restart of remote access nodes, such as RNC and BSC, may cause a large number of registration attempts, depending upon the behavior of the base stations controlled by the restarted radio access network nodes. There could also be a flood of resource allocation requests for mobile originating services, if large numbers of mobile users attempt to simultaneously initiate signaling procedures in order to allocate resources for mobile originating services, such as establishing bearers. Also, large numbers of mobile terminated events for users belonging to a specific HLR/HSS, such as, for example, sending an SS message to say happy new year at the same time may cause excessive signaling words within the public land mobile network (PLMN).

According to the related art, overload control indication from the home subscriber server to such serving nodes is discussed, for example, in Publication TR 23.843, which discusses solutions in section 6.2 thereof. This provides a high level indication that the HLR/HSS includes an overload indication in each response message to the network management entity such as the MME/SGSN/MSC (mobile management entity/serving GPRS support node/mobile switching center). The MME/SGSN/MSC restricts the flow of messages toward the home subscriber server. However, there is no consideration of the severity of the overload, nor any information regarding the detail handling of the overload indication in the serving nodes.

Document "HLR/HSS Overload Notification solution", TD S2-112222, 3GPP TSG SA WG2 Meeting #84, 11 - 15 April 2011, Bratislava, Slovakia discloses a HLR/HSS providing an overload notification to a MME/SGSN/MSC, so that the MME/SGSN/MSC can reduce the signalling towards to the HLR/HSS, e.g. reject the registration for new arriving UEs.

US 2011/270967 A1 discloses managing an overload condition in a network are disclosed including monitoring the network for a traffic overload condition, and determining whether a more severe traffic overload condition or a less severe traffic overload condition is detected by using a network monitor and controller, and applying a bandwidth preservation scheme.

US 2003/027571 A1 discloses managing congestion in an HLR. At regular intervals or in response to a registration message associated with a Mobile Station (MS) registration request, the HLR can transmit the current load conditions in the HLR to one or more Mobile Switching Centers (MSC's) within the area served by the HLR. In response, the MSC's can use this load information to reduce the registration intensity in order to protect the HLR from congestion.

EP 2 083 579 A1 discloses processing an location update request initiated by a user terminal; detecting the congestion state of a link, and starting stream control according to the link congestion state.

### SUMMARY:

The invention is defined by a method according to claim 1 and an apparatus according to claim 10. Further embodiments are defined by the dependent claims.

The invention can include, in certain embodiments, a method comprising transmitting communications traffic to a home subscriber server, and receiving an overload indicator from the home subscriber server. The overload indicator can include a severity indicator. Traffic volume transmitted to the home subscriber server is adjusted based upon the severity indicator.

In other embodiments, the invention can include an apparatus comprising at least one memory including computer program code, and at least one processor. The at least one memory and the computer program code are configured to, with the at least one processor, cause the apparatus at least to enable transmission of communications traffic to a home subscriber server, and to receive an overload indicator from the home subscriber server. Traffic volume transmitted to the home subscriber server is adjusted based upon the severity indicator.

In another embodiment, the invention can include an apparatus comprising at least one memory including computer program code, and at least one processor, wherein the at least one memory and the computer program code are configured to, with the at least one processor, cause the apparatus at least to receive communications traffic on a network, and to transmit an overload indicator at such time as traffic volume exceeds a threshold. The overload indicator includes a severity indicator. The apparatus can also transmit a NO MORE OVERLOAD indicator when the overload condition is alleviated.

In another embodiment, the invention can include a method comprising processing communications traffic on a network, and transmitting an overload indicator at such time as traffic volume exceeds a threshold. The overload indicator can include a severity indicator. The method can also transmit a NO MORE OVERLOAD indicator when the overload condition is alleviated.

In another embodiment, the invention can include a method comprising processing communications traffic on a network, and transmitting a response message across Sh/S6a/SWx/Cx/SP with overload indicator at such time as traffic volume exceeds a threshold. The overload indicator in the response message across Sh/S6a/SWx/Cx/SP will serve as a HSS overload indication from the serving node perspective.

### BRIEF DESCRIPTION OF THE DRAWINGS:

For proper understanding of the invention, reference should be made to the accompanying drawings, wherein:
Figure 1 illustrates an example of an evolved packet system employing the present invention;
Figure 2 illustrates an overload indication according to an embodiment of the invention;
Figure 3 illustrates normal operation of a configuration employing embodiments of the claimed invention;
Figure 4 illustrates systems and methods of an embodiment of the invention;
Figure 5 illustrates another embodiment of the invention;
Figure 6 illustrates an embodiment of the invention;
Figure 7 illustrates another embodiment of the invention; and
Figure 8 illustrates other embodiments of apparatuses employing the claimed invention.

### DETAILED DESCRIPTION OF THE PREFERRED EMBODIMENT(S):

Embodiments of the present invention utilize numerous overload mechanisms to perform effective and efficient HSS overload control to avoid a crash during operation, and to improve the experience to the user.

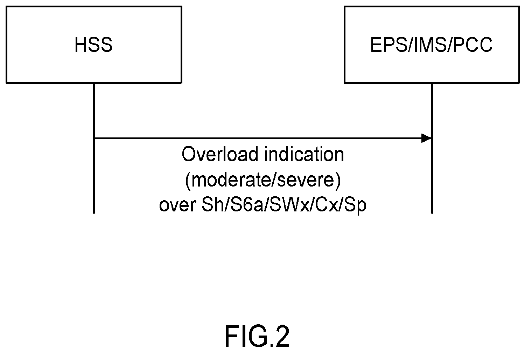

In one embodiment, the HSS is configured to monitor its traffic condition, and to signal an overload indication to the serving nodes, with this indication including an indication of the severity of the overload, such as minor, moderate, or severe, to assist the serving nodes in determining how to effectively control signaling traffic to reduce or eliminate the overload condition. Such a configuration is illustrated, for example, in Figure 2, which illustrates the home subscriber server sending an overload indication, for example, over Sh/S6a/SWx/Cx/SP. In this example, a moderate overload might mean that the home subscriber server can still process most of its requests, and is prioritizing certain interfaces over the other. For example, it might be configured to indicate that Cx has a higher priority than S6a, etc. The home subscriber server may also start to ignore certain messages.

Severe overload in this example can mean that the home subscriber server is not able to process most of the requests, and that it has started to ignore most incoming requests.

In another embodiment, a user or user equipment may be admitted to the network with minimal interaction to the home subscriber server. The network, under control of a network management entity, may provide some default services until the HSS overload condition is alleviated. With this configuration, the user equipment is admitted expeditiously to the network to avoid the user equipment continually retrying to attach to the network, and therefore avoiding unnecessary resending of messages to the home subscriber server from the EPS/IMS/PCC. In this initial condition, the home subscriber server may indicate a moderate overload condition to the serving node (MME/SGSN/MSS/S-CSCF), so that the serving node can either select an APN (access point name) that does not require the P-GW (packet gateway) to interact with the PCC, in order to avoid further interaction with the home subscriber server from the PCC. This selected APN, which can be referred to as the "congested mode APN," uses a static configuration to provide bearer services to the user, such as basic internet services. In the alternative, the MME might indicate a "congestion mode" along with the requested APN to the P-GW during PDN (packet data network) activation procedures. The user equipment can then perform IMS registration. The home subscriber server might, for example, prioritize the Cx interface, and give an overload indication to the I-CSCF (interrogating call session control function), so that further interactions, such as new requests, with the HSS are avoided. The I-CSCF can pass this overload indication to the S-CSCF so that the S-CSCF can pass this indication to, for example, the IMS AS (Application Server). The IMS AS elements will use a default profile to provide limited service to the user equipment until the home subscriber server overload condition is subsided.

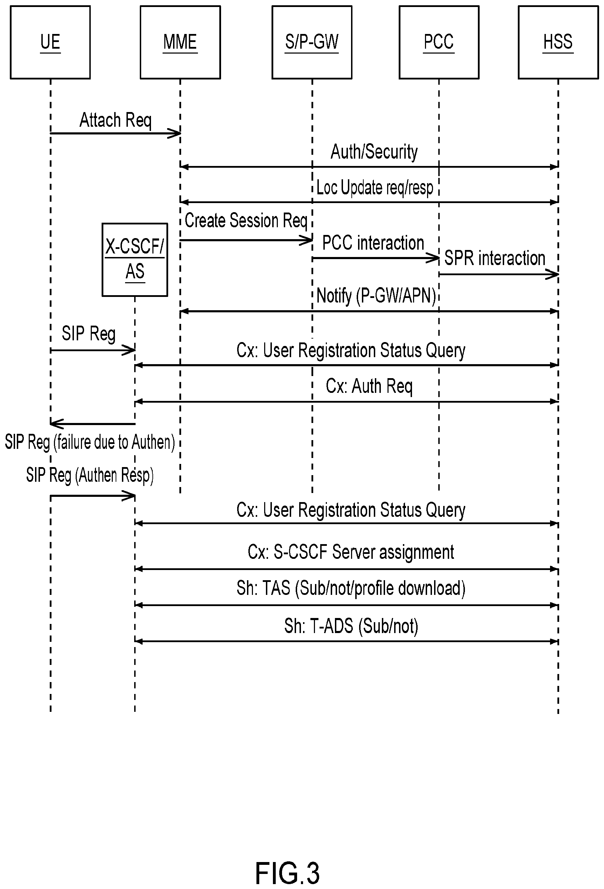

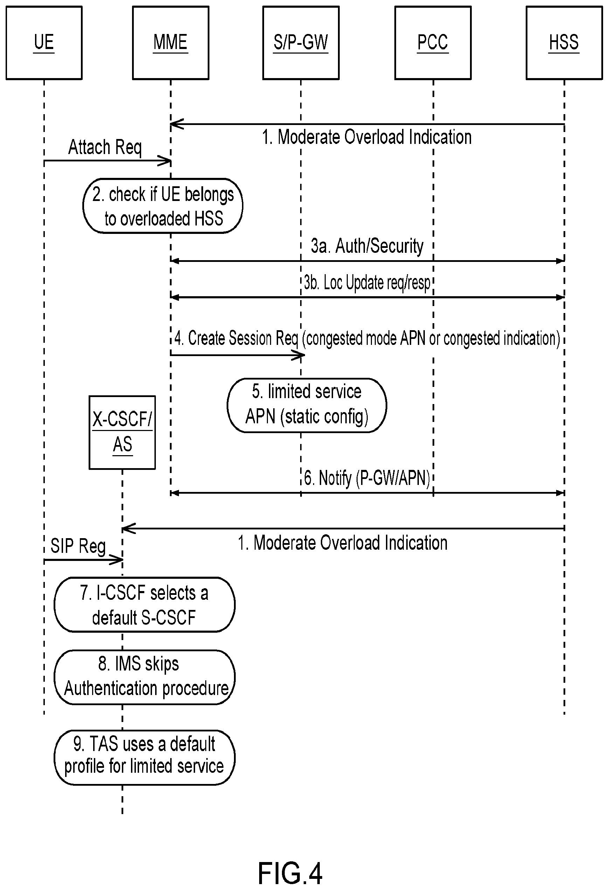

Figures 3 and 4 illustrate these aspects of the invention. Referring to Figure 3, a normal condition is illustrated, prior to the home subscriber server being overloaded. Figure 4 illustrates a condition when an overload condition exists, and when the overload indication is received. Referring to item 1 of Figure 4, the MME receives an indication of a moderate overload indication from the home subscriber server. The MME then implements a procedure such that when an Attach request is received, the MME checks whether the user equipment associated with the request belongs to the PLMN that has sent the overload indication. If so, the MME may skip authentication and/or location update with the overloaded home subscriber server. The MME can indicate an "overload" condition to the P-GW either by using a congested mode APN, or congestion indication, along with the requested APN. The P-GW, in step 5, can use a local statically defined configuration to avoid PCC interaction when receiving the congested indication in step 4. This static configuration can allow certain limited services to the user equipment, such as internet access. Step 6 indicates a notify procedure, but the mobile management entity may choose to skip this procedure. During IMS registration, in step 7, the I-CSCF, after receiving an overload indication from the home subscriber server, can select a default S-CSCF to provide limited service to the user equipment. The I-CSCF can also include the "overload" indication toward the S-CSCF. In step 8, based upon operator policy, the IMS authentication may also be skipped. In step 9, the S-CSCF can pass the overload indication to the IMS application server (AS) so that the application server can use a default profile to provide limited service, and therefore avoid further interaction to the home subscriber server.

At such time that the overload condition in the home subscriber server has subsided, the home subscriber server can transmit a "no more overload" indication to its Diameter clients. When the MME gets this indication, the user equipment is then forced to perform a reattachment to the LTE, and assigns a new IP address. The new IP address will cause the user equipment to once again perform the IMS registration. This procedure restores the normal profile and services to the user equipment. When the MME is performing this restore procedure, it should not perform a large number of restorations at once, since that could create another overload condition to the HSS.

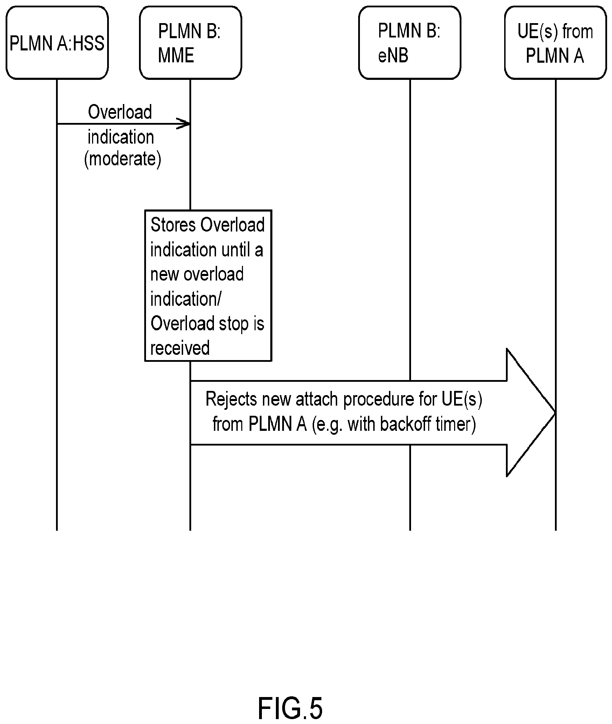

In another embodiment, as illustrated in Figure 5, an HSS in PLMN A may indicate an overload condition (moderate/severe) to the MME, which may be in PLMN B. If the indication is moderate, the MME can allow the ongoing attach procedures that are at completion. New requests destined, for example, for PLMN A, which would thus require interactions with the overloaded HSS, would not be allowed by the HSS; the MME would then selectively reject users from PLMN A, for example, with a back-off timer.

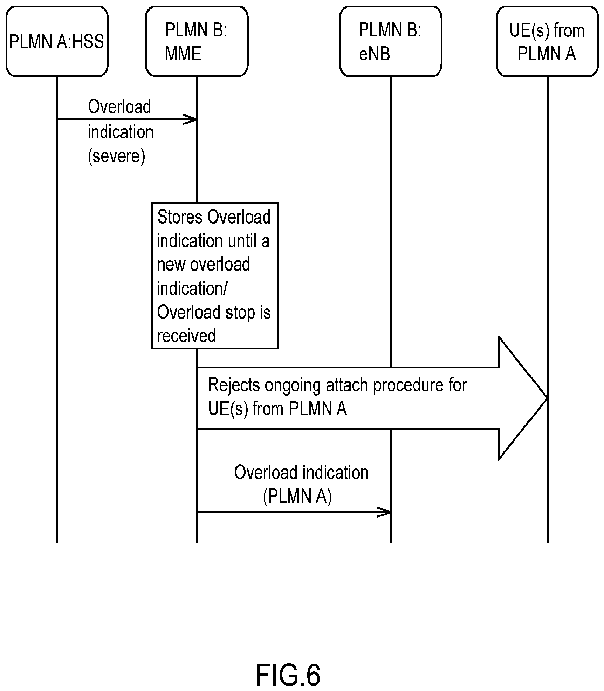

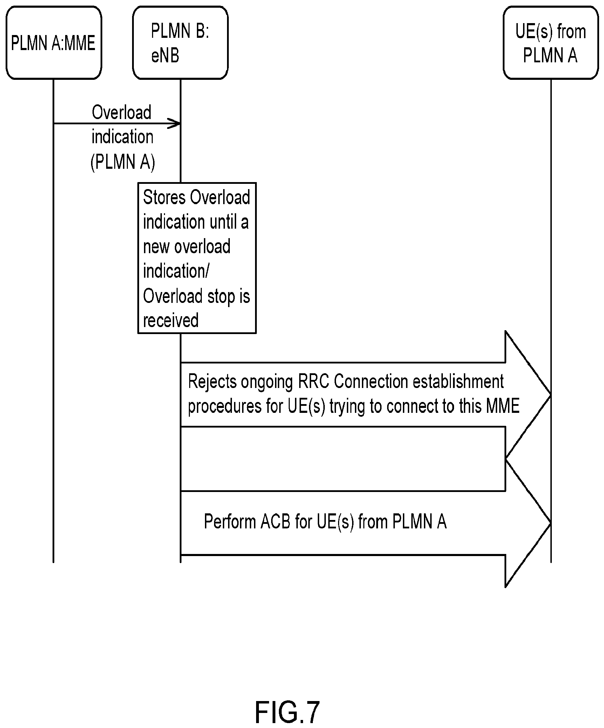

If the overload indication is for a severe overload, the MME may stop all ongoing Attach procedures, and reject the users belonging to this PLMN with a back-off timer. New requests destined, for example, for PLMN A will not be allowed, and the MME would selectively reject users from PLMN A. The MME should also indicate to other nodes under its control that this particular PLMN is in an overload condition. Other nodes such as eNB shall perform Access Stratum overload procedures for users belonging to this specific PLMN. eNB could then broadcast access class barring for user equipment belonging to PLMN A, or perform other access stratum -based overload control procedures for users belonging to this specific PLMN. For example, it could reject RRC connection with a wait timer or eWaitTimer for user equipment requesting to connect to this MME. The user equipment will need to read the barring information for its HPLMN/EHPLMN, and act accordingly. The call flows of Figure 6 illustrate a procedure within the MME upon severe overload indication from the HSS. Figure 7 indicates a procedure within the eNB triggered by the overload indication for PLMN A.

In summary, when the HSS provides a moderate overload indication, the serving PLMN and IMS will start to lower the interaction to the HSS, in order to allow the HSS to recover. The UE is still able to have some limited services, which will prevent the UE to keep retrying to connect; this avoids unnecessary repeating messages to the HSS.

When the HSS provides a severe overload indication, the serving PLMN will start to block access from the user equipment associated with the overloaded HSS/PLMN. This allows the HSS to recover as soon as possible. If the HSS cannot recover, the UE will not get normal services.

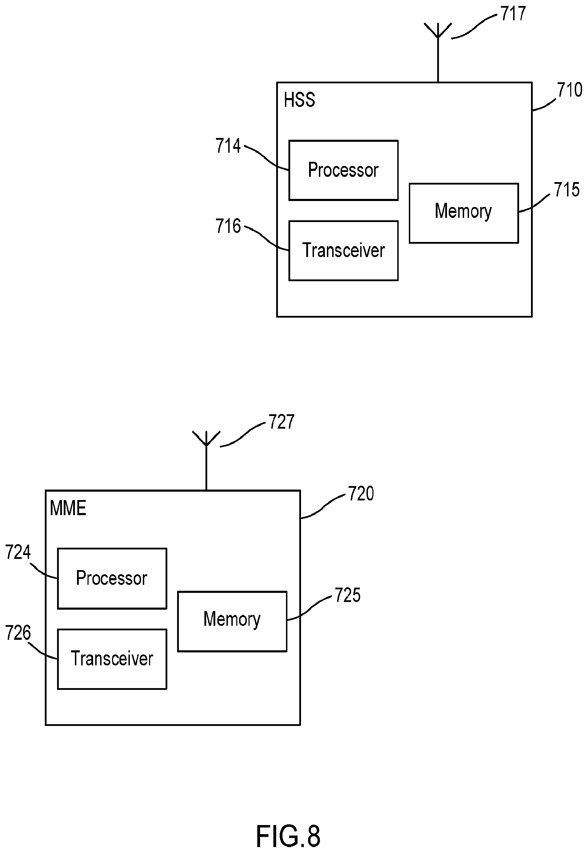

Figure 8 illustrates a system according to certain embodiments of the invention. In one embodiment, a system may include two devices, such as, for example, HSS 710 and MME 720. Each of these devices may include at least one processor, respectively indicated as 714 and 724. At least one memory is provided in each device, and indicated as 715 and 725, respectively. The memory may include computer program instructions or computer code contained therein. Transceivers 716 and 726 are provided, and each device may also include an antenna, respectively illustrated as 717 and 727. Other configurations of these devices, for example, may be provided. For example, MME 720 and HSS 710 may be configured for wired communication, rather than wireless communication, and in such a case antennas 717 and 727 would illustrate any form of communication hardware, without requiring a conventional antenna.

Transceivers 716 and 726 can each, independently, be a transmitter, a receiver, or both a transmitter and a receiver, or a unit or device that is configured both for transmission and reception.

Processors 714 and 724 can be embodied by any computational or data processing device, such as a central processing unit (CPU), application specific integrated circuit (ASIC), or comparable device. The processors can be implemented as a single controller, or a plurality of controllers or processors.

Memories 715 and 725 can independently be any suitable storage device, such as a non-transitory computer-readable medium. A hard disk drive (HDD), random access memory (RAM), flash memory, or other suitable memory can be used. The memories can be combined on a single integrated circuit as the processor, or may be separate therefrom. Furthermore, the computer program instructions stored in the memory and which may be processed by the processors can be any suitable form of computer program code, for example, a compiled or interpreted computer program written in any suitable programming language.

The memory and the computer program instructions can be configured, with the processor for the particular device, to cause a hardware apparatus such as HSS 710 or MME 720, to perform any of the processes described above. Therefore, in certain embodiments, a non-transitory computer-readable medium can be encoded with computer instructions that, when executed in hardware, perform a process such as one of the processes described herein. Alternatively, certain embodiments of the invention can be performed entirely in hardware.

Furthermore, although Figure 8 illustrates a system including an MME and an HSS, embodiments of the invention may be applicable to other configurations, and configurations involving additional elements, as illustrated herein.

One having ordinary skill in art would readily understand that the invention as described above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent. In order to determine the metes and bounds of the invention, therefore, reference should be made to the appended claims.

## Claims

1. A method performed by an apparatus (720), the method comprising:
transmitting communications traffic to a home subscriber server (710);
receiving an overload indicator from the home subscriber server (710), said overload indicator including a severity indicator, wherein the severity indicator is one of moderate or severe;
adjusting traffic volume transmitted to the home subscriber server (710) based upon the severity indicator, wherein the adjusting comprises,
upon determining that the severity indicator is moderate, allowing ongoing attach procedures that are at completion, and rejecting new attach procedures involving the home subscriber server; and
upon determining that the severity indicator is severe, stopping all ongoing attach procedures.

2. The method according to claim 1, wherein the overload indicator is received by a network management entity.

3. A method according to any preceding claim, wherein the adjusting traffic volume comprises admitting user equipment to a network with default services, until a message is received indicating that an overload condition no longer exists.

4. The method according to any preceding claim, wherein the adjusting traffic volume comprises ignoring certain messages which require action by the home subscriber server (710).

5. The method according to any preceding claim, wherein the adjusting traffic volume comprises admitting users through access points which do not require interaction with the home subscriber server (710) which has sent the overload indicator.

6. The method according to any preceding claim, further comprising receiving a NO MORE OVERLOAD signal from the home subscriber server (710).

7. The method according to any preceding claim, wherein the adjusting traffic volume comprises providing limited services without authentication.

8. The method according to claim 7, wherein the adjusting traffic volume further comprises providing emergency services.

9. The method according to any preceding claim, further comprising, after a NO MORE OVERLOAD signal is received, re-attaching users which were attached during the overload condition.

10. An apparatus (720), comprising:
at least one memory (725) including computer program code; and;
at least one processor (724);
wherein the computer program code is configured to cause the apparatus (720) to perform the method of claim 1 when executed by the at least one processor.

11. The method according to claim 1, wherein adjusting traffic volume comprises adjusting traffic volume using access stratum overload procedures.

12. The apparatus according to claim 10, further comprising a back off timer.

## Patentansprüche

1. Verfahren, das von einer Vorrichtung (720) durchgeführt wird, wobei das Verfahren umfasst:
Übertragen von Kommunikationsverkehr an einen Heimteilnehmerserver (710);
Empfangen eines Überlastungsindikators von dem Heimteilnehmerserver (710), wobei der Überlastungsindikator einen Schweregradindikator beinhaltet, wobei der Schweregradindikator entweder moderat oder schwer ist;
Angleichen des Verkehrsvolumens, das an den Heimteilnehmerserver (710) übertragen wird, auf Basis des Schweregradindikators, wobei das Angleichen umfasst,
bei Feststellen, dass der Schweregradindikator moderat ist, Erlauben laufender Anhänge-Verfahren, die abgeschlossen sind, und Ablehnen neuer Anhänge-Verfahren, die den Heimteilnehmerserver betreffen; und
bei Feststellen, dass der Schweregradindikator schwer ist, Stoppen aller laufenden Anhänge-Verfahren.

2. Verfahren nach Anspruch 1, wobei der Überlastungsindikator von einer Netzwerkverwaltungsentität empfangen wird.

3. Verfahren nach einem der vorstehenden Ansprüche, wobei das Angleichen des Verkehrsvolumens das Zulassen von Benutzergerät zu einem Netzwerk mit Standarddiensten umfasst, bis eine Nachricht empfangen wird, die angibt, dass eine Überlastungsbedingung nicht mehr existiert.

4. Verfahren nach einem der vorstehenden Ansprüche, wobei das Angleichen des Verkehrsvolumens das Ignorieren bestimmter Nachrichten, die eine Aktion von dem Heimteilnehmerserver (710) erforderlich machen, umfasst.

5. Verfahren nach einem der vorstehenden Ansprüche, wobei das Angleichen des Verkehrsvolumens das Zulassen von Benutzern durch Zugriffspunkte, die keine Interaktion von dem Heimteilnehmerserver (710), der den Überlastungsindikator gesendet hat, erforderlich machen, umfasst.

6. Verfahren nach einem der vorstehenden Ansprüche, ferner umfassend
Empfangen eines NO MORE OVERLOAD (keine Überlastung mehr) Signals von dem Heimteilnehmerserver (710).

7. Verfahren nach einem der vorstehenden Ansprüche, wobei das Angleichen des Verkehrsvolumens das Bereitstellen beschränkter Dienste ohne Authentifizierung umfasst.

8. Verfahren nach Anspruch 7, wobei das Angleichen des Verkehrsvolumens ferner das Bereitstellen von Notfalldiensten umfasst.

9. Verfahren nach einem der vorstehenden Ansprüche, ferner, nachdem ein NO MORE OVERLOAD Signal empfangen wurde, erneutes Anhängen von Benutzern, die während der Überlastungsbedingung angehängt waren, umfassend.

10. Vorrichtung (720), umfassend:
mindestens einen Speicher (725), der Computerprogrammcode enthält; und
mindestens einen Prozessor (724);
wobei der Computerprogrammcode konfiguriert ist, die Vorrichtung (720) zu veranlassen, das Verfahren nach Anspruch 1 durchzuführen, wenn er von dem mindestens einen Prozessor ausgeführt wird.

11. Verfahren nach Anspruch 1, wobei das Angleichen des Verkehrsvolumens das Angleichen des Verkehrsvolumens unter Verwendung von Stratum-Überlastungsverfahren umfasst.

12. Vorrichtung nach Anspruch 10, ferner einen Zurückhaltezeitgeber umfassend.

## Revendications

1. Un procédé exécuté par un appareil (720), le procédé comprenant :
la transmission de trafic de communications à un serveur d'abonnés domestique (710),
la réception d'un indicateur de surcharge à partir du serveur d'abonnés domestique (710), ledit indicateur de surcharge comprenant un indicateur de sévérité, l'indicateur de sévérité étant un indicateur parmi modéré ou sévère,
l'ajustement d'un volume de trafic transmis au serveur d'abonnés domestique (710) en fonction de l'indicateur de sévérité, l'ajustement comprenant,
après la détermination que l'indicateur de sévérité est modéré, l'autorisation de procédures de rattachement en cours qui sont au stade d'achèvement, et le rejet de nouvelles procédures de rattachement impliquant le serveur d'abonnés domestique, et
après la détermination que l'indicateur de sévérité est sévère, l'arrêt de la totalité des procédures de rattachement en cours.

2. Le procédé selon la revendication 1, dans lequel l'indicateur de surcharge est reçu par une entité de gestion de réseau.

3. Un procédé selon l'une quelconque des revendications précédentes, dans lequel l'ajustement d'un volume de trafic comprend l'admission d'un équipement d'utilisateur à un réseau avec des services par défaut jusqu'à ce qu'un message soit reçu indiquant qu'une condition de surcharge n'existe plus.

4. Le procédé selon l'une quelconque des revendications précédentes, dans lequel l'ajustement d'un volume de trafic comprend l'ignorance de certains messages qui exigent une action par le serveur d'abonnés domestique (710).

5. Le procédé selon l'une quelconque des revendications précédentes, dans lequel l'ajustement d'un volume de trafic comprend l'admission d'utilisateurs par l'intermédiaire de points d'accès qui n'exigent pas une interaction avec le serveur d'abonnés domestique (710) qui a envoyé l'indicateur de surcharge.

6. Le procédé selon l'une quelconque des revendications précédentes, comprenant en outre la réception d'un signal PLUS DE SURCHARGE à partir du serveur d'abonnés domestique (710).

7. Le procédé selon l'une quelconque des revendications précédentes, dans lequel l'ajustement d'un volume de trafic comprend la fourniture de services limités sans authentification.

8. Le procédé selon la revendication 7, dans lequel l'ajustement d'un volume de trafic comprend en outre la fourniture de services d'urgence.

9. Le procédé selon l'une quelconque des revendications précédentes, comprenant en outre, après la réception d'un signal PLUS DE SURCHARGE, le ré-attachement d'utilisateurs qui étaient rattachés au cours de la condition de surcharge.

10. Un appareil (720), comprenant :
au moins une mémoire (725) comprenant du code de programme informatique, et,
au moins un processeur (724),
dans lequel le code de programme informatique est configuré de façon à amener l'appareil (720) à exécuter le procédé selon la revendication 1 lorsqu'il est exécuté par le au moins un processeur.

11. Le procédé selon la revendication 1, dans lequel l'ajustement d'un volume de trafic comprend l'ajustement d'un volume de trafic au moyen de procédures de surcharge de strate d'accès.

12. L'appareil selon la revendication 10, comprenant en outre une horloge de temporisation.
